# EUROPEAN PATENT APPLICATION

(11) **EP 3 569 452 A1**
(43) Date of publication of application: **20.11.2019**
(21) Application number: 19168147.7
(22) Date of filing: 09.04.2019
(51) Int. Cl.: B60R 22/10, B60R 22/14, B60N 2/26

(54) **INFANT SEAT BELT DEVICE**

(30) Priority: 16.05.2018 KR 20180056111
(71) Applicant: Kim, Chae Hwan, Chungcheongnam-do 31765 (KR)
(72) Inventor: Kim, Chae Hwan, Chungcheongnam-do 31765 (KR)
(74) Representative: Zardi, Marco

(57) **Abstract**

Disclosed herein is an infant seat belt device. The infant seat belt device includes: a waist belt configured to completely surround the waist of an infant in a single circle; a first seat belt unit configured to be selectively coupled to and separated from one side of the waist belt in the state of having been fastened to a seat on which the infant sits; and a second seat belt unit configured to be selectively coupled to and separated from the other side of the waist belt in the state of having been fastened to the seat on which the infant sits.

## Description

### CROSS-REFERENCE TO RELATED APPLICATION

This application claims the benefit of Korean Patent Application No. 10-2018-0056111 filed on May 16, 2018, which is hereby incorporated by reference herein in its entirety.

### BACKGROUND

### 1. Technical Field

Various embodiments of the present invention relate to infant seat belt devices.

### 2. Description of the Related Art

In general, a seat belt for a vehicle is a device designed to secure the safety of an occupant by preventing the occupant from being cast forward by an impact generated when a vehicle collides, speeds, or stops suddenly while driving.

Although such a seat belt is provided in the back support of a seat of a vehicle in order to protect an occupant having a large body, such as an adult, from an impact generated by a collision, speeding, a sudden stop, or the like, there is no seat belt device designed to protect an occupant having a small body, such as an infant.

Accordingly, conventionally, an occupant having a small body, such as an infant, has used an auxiliary seat equipped with a separate seat belt. However, this scheme requires the auxiliary seat to be fastened to a seat of a vehicle by means of a conventional seat belt. As a result, problems arise in that wearing is burdensome and the auxiliary seat needs to be carried whenever an occupant having a small body, such as an infant, boards the vehicle.

In order to overcome the above problems, there was proposed an auxiliary infant seat belt for an vehicle (Korean Utility Model Registration No. 20-0269423), the auxiliary infant seat belt including: a waist belt part configured such that waist buckle catches are formed by belt members overlapping such that buckles are fitted over the left and right sides thereof, and adapted to be fastened to a waist; a pair of shoulder belt parts formed to be caught on the shoulder of a human body in such a manner that drawable belt members drawn out after forming the left and right waist buckle catch portions are drawn vertically upward by a first folding portion, form a back support portion by means of a second folding portion, and are drawn again; left and right chest buckle catch parts configured such that the drawable belt members of the left and right shoulder belt parts are woven by a third folding portion, and formed such that the buckles are fitted over them; and leg belt parts configured such that the belt members drawn out from the left and right chest buckle catch parts are inserted into the waist buckle catch parts and extended downward and buckles and length control elements are fitted into the lower ends of the belt members.

However, the auxiliary infant seat belt includes the waist belt part, the shoulder belt parts, the chest buckle catch parts, and the leg belt parts, and thus the structure thereof is complicated.

As a result, in order to wear the auxiliary infant seat belt, an occupant who sits on a seat of the vehicle needs to wear the shoulder belt parts and the chest buckle catch parts on his or her upper body part and to then wear the leg belt parts on his or her both legs, and thus a problem arises in that a wearing process is also complicated.

In particular, an occupant having a small body, such as an infant, needs to board the vehicle in the state of having worn the auxiliary seat belt, to pull a seat belt disposed in the vehicle, to insert the seat belt behind the back of the occupant so that a corresponding portion between the waist belt part of the auxiliary seat belt and the second folding portion is engaged and fastened, and to insert and fasten the tongues of the seat belt into the buckles. Accordingly, the upper body part of the occupant is incompletely fastened to the back support of the seat of the vehicle. As a result, a problem arises in that when a traffic accident, such as a sudden stop, a collision, a rear-end collision, or the like, occurs, an occupant having a small body, such as an infant, cannot be safely protected.

The above-described information disclosed in the description of the related art is intended merely to improve the understanding of the background of the present invention, and thus information not constituting the prior art may be included in the foregoing description.

### SUMMARY

The present invention has been conceived to overcome the above-described problems, and an object of the present invention is to provide an infant seat belt device that is used in such a manner that an infant wears a separate waist belt and two seat belt units are fitted over the waist belt, so that the seat belt units having an automatic brake function hold the waist of the infant in case of the sudden stop, rear-end collision, collision, or the like of a vehicle and the seat belt units are allowed to move freely by a length (for example, about 400 mm), over which the infant can move, in normal times, thereby securing the safety of the infant while reducing the inconvenience of the infant.

Another object of the present invention is to provide an infant seat belt device that is used in such a manner that an infant wears a separate vest and four seat belt units are fitted over the vest, so that the seat belt units having an automatic brake function hold the shoulder and waist of the infant in case of the sudden stop, rear-end collision, collision, or the like of a vehicle, and the seat belt units are allowed to move freely by a length (for example, about 400 mm), over which the infant can move, in normal times, thereby securing the safety of the infant while reducing the inconvenience of the infant.

According to an aspect of the present invention, there is provided an infant seat belt device, including: a waist belt configured to completely surround the waist of an infant in a single circle; a first seat belt unit configured to be selectively coupled to and separated from one side of the waist belt in the state of having been fastened to a seat on which the infant sits; and a second seat belt unit configured to be selectively coupled to and separated from the other side of the waist belt in the state of having been fastened to the seat on which the infant sits.

The first seat belt unit may include a first retractor configured to be coupled to one side of the seat, a first belt configured to be drawn from the first retractor, and a first clip configured to be coupled to the first belt and to be selectively coupled to and separated from one side of the waist belt; the second seat belt unit may include a second retractor configured to be coupled to the other side of the seat, a second belt configured to be drawn from the second retractor, and a second clip configured to be coupled to the second belt and to be selectively coupled to and separated from the other side of the waist belt; the first clip may include a first coupling hole configured to be coupled to the first belt and a first catch hook configured to be selectively coupled to and separated from one side of the waist belt and to have an open bottom; and the second clip may include a second coupling hole configured to be coupled to the second belt and a second catch hook configured to be selectively coupled to and separated from the other side of the waist belt and to have an open bottom.

According to another aspect of the present invention, there is provided an infant seat belt device, including: a vest configured to completely surround the trunk of an infant in a single circle; a pair of first coupling members configured to be coupled to the left and right sides of the upper side of the back of the vest; a pair of second coupling members configured to be coupled to the left and right sides of the lower side of the back of the vest; a pair of first seat belt units configured to be selectively coupled to and separated from the first coupling members in the state of having been fastened to the back support of a seat on which the infant sits; and a pair of second seat belt units configured to be selectively coupled to and separated from the second coupling members in the state of having been fastened to the back support of the seat on which the infant sits.

Each of the pair of first seat belt units may include a first retractor configured to be coupled to one of the left and right sides of the upper side of the back support of the seat, a first belt configured to be drawn from the first retractor, and a first clip configured to be coupled to the first belt and to be selectively coupled to and separated from a corresponding one of the first coupling members; each of the pair of second seat belt units may include a second retractor configured to be coupled to one of the left and right sides of the lower side of the back support of the seat, a second belt configured to be drawn from the second retractor, and a second clip configured to be coupled to the second belt and to be selectively coupled to and separated from a corresponding one of the second coupling members; the first clip may include a first coupling hole configured to be coupled to a corresponding one of the first belts and a first catch hook configured to be selectively coupled to and separated from a corresponding one of the first coupling members and to have an open bottom; and the second clip may include a second coupling hole configured to be coupled to a corresponding one of the second belts and a second catch hook configured to be selectively coupled to and separated from a corresponding one of the second coupling members and to have an open bottom.

### BRIEF DESCRIPTION OF THE DRAWINGS

The above and other objects, features, and advantages of the present invention will be more clearly understood from the following detailed description taken in conjunction with the accompanying drawings, in which:
FIGS. 1a to 1c are schematic diagrams showing an infant seat belt device according to one embodiment of the present invention;
FIG. 2 is a schematic diagram showing an example in which the infant seat belt device according to the embodiment of the present invention is worn;
FIGS. 3a and 3b are schematic diagrams showing an infant vest and a seat related to an infant seat belt device according to another embodiment of the present invention; and
FIG. 4 is a schematic diagram showing a seat related to an infant seat belt device according to still another embodiment of the present invention.

### DETAILED DESCRIPTION

Embodiments of the present invention will be described in detail below with reference to the accompanying drawings.

The embodiments of the present invention are provided to more fully describe the present invention to those skilled in the art. The embodiments may be modified to various different forms, and the scope of the present invention is not limited to the following embodiments. Rather, these embodiments are provided to make the present disclosure more reliable and complete and to convey the spirit of the present invention to those skilled in the art.

Furthermore, in the following drawings, the thickness or size of each layer may be exaggerated for the sake of easy description and clarity, and the same reference symbols denote the same component throughout the drawings. As used in the present specification, the term "and/or" refers to the inclusion of all combinations of one or more of listed items. Furthermore, in the present specification, the term "connected" refers to not only a case where member A is directly connected to member B but also a case where member A is indirectly connected to member B with member C interposed therebetween.

The terms used therein are each intended to describe a specific embodiment, but is not intended to limit the present invention. As used in the present specification, a singular expression may include a plural expression unless otherwise stated clearly in the context. Furthermore, when used in the present specification, the term "include," "comprise" and "have" are each intended to specify shapes, numbers, steps, operations, components, and/or a combination thereof, but are not intended to exclude the presence or addition of another shape, another number, another step, another operation, another component, another component, and/or another combination.

In the present specification, although the terms first, second, third, etc. may be used herein to describe various members, components, regions, layers and/or sections, these members, components, regions, layers and/or sections should not be limited by these terms. These terms are only used to distinguish one member, component, region, layer, or section from another member, component, region, layer, or section. Accordingly, a first member, component, region, layer, or section discussed below could be termed a second member, component, region, layer, or section without departing from the teachings of the present invention.

Spatially relative terms, such as "beneath," "below," "lower," "above," "upper," and the like, may be used herein for ease of description to describe the relationship between one element or feature and another element or feature as shown in the drawings. It will be understood that the spatially relative terms are intended to encompass different orientations of the element or feature in use or operation, in addition to the orientation depicted in the drawings. For example, if an element or feature in the drawings is turned over, the element described as being placed "below" another element or feature may be then placed "above" the other element or feature. Accordingly, the exemplary term "below" can encompass both orientations of above and below.

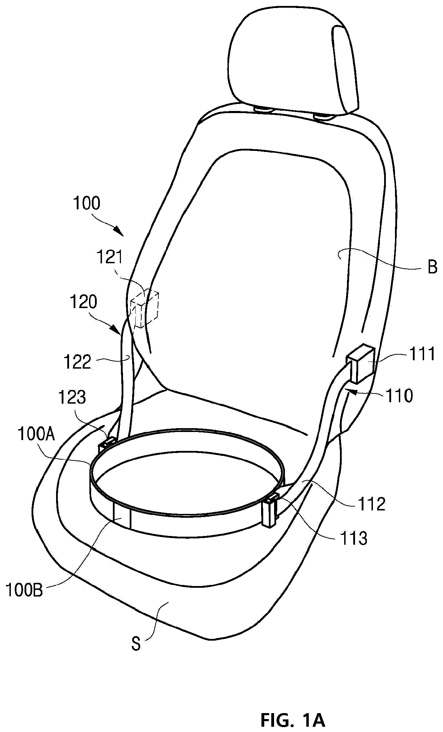

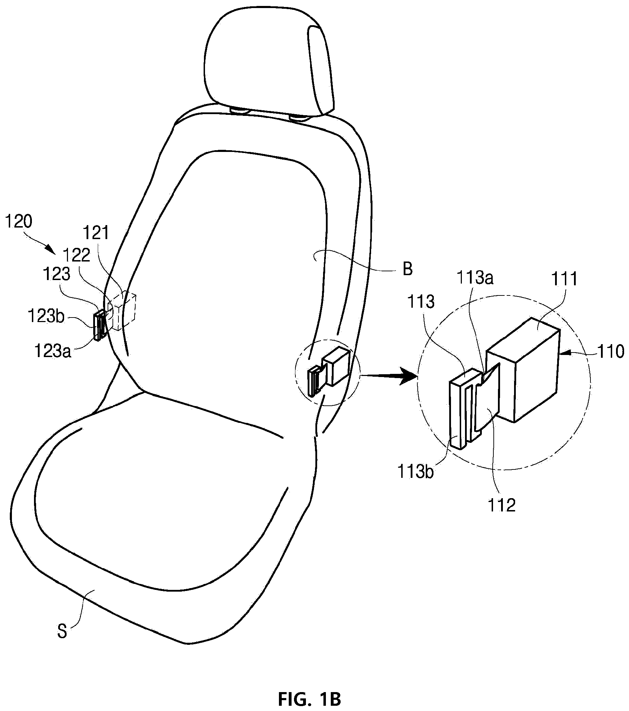

FIGS. 1a to 1c are schematic diagrams showing an infant seat belt device 100 according to one embodiment of the present invention.

As shown in FIGS. 1a to 1c, the infant seat belt device 100 according to the embodiment of the present invention may include a waist belt 100A, a first seat belt unit 110, and a second seat belt unit 120.

The waist belt 100A may completely surround the waist of an infant in a single circle. For example, but without limitation, the waist belt 100A may be coupled to the pants of an infant, and may prevent the pants from falling down. Furthermore, the waist belt 100A may include a buckle structure 100B, disposed at both ends of the waist belt 100A and configured to be selectively combined and separated, in order to be easily worn on and separated from an infant. It will be apparent that the waist belt 100A may have a closed curve shape without a buckle structure. In this case, the waist belt 100A may be fastened around the waist of an infant from the head of the infant through the chest of the infant, or may be fastened around the waist of an infant from the feet of the infant through the knees of the infant.

For example, but without limitation, the waist belt 100A may be made of natural leather, artificial leather, natural fiber, artificial fiber, or the like, and is preferably made of a material that does not stretch due to external force during the sudden stop, rear-end collision, collision, or the like of a vehicle.

Meanwhile, when the waist belt 100A is worn, the waist belt 100A is preferably located on the pelvis of an infant rather than the abdomen of the infant, and thus an organ may be prevented from being damaged during the sudden stop, rear-end collision, collision, or the like of a vehicle.

The first seat belt unit 110 may be selectively coupled to and separated from one side (for example, the left side) of the waist belt 100A in the state of having been fastened to a seat (for example, a seat part S or back support B) on which an infant sits.

For example, but without limitation, the first seat belt unit 110 may include a first retractor 111, a first belt 112, and a first clip 113.

For example, but without limitation, the first retractor 111 may be directly fastened to one side (for example, the left side) of the seat (for example, the seat part S or back support B), the first belt 112 may be selectively drawn from and rewound into the first retractor 111 by a predetermined length, and the first clip 113 may be coupled to an end of the first belt 112 and may be selectively coupled to and separated from one side (for example, the left side) of the waist belt 100A.

In this case, the first retractor 111 allows the first belt 112 to be drawn by a length of about 400 mm at a relatively low speed, fastens the first belt 112 without being drawn at a relative high speed (for example, in the case of the sudden stop, rear-end collision, collision, or the like of a vehicle), and allows the first belt 112 to be rewound when the first belt 112 is separated from the waist belt 100A. Since the structure of the first retractor 111 is well known, a detailed description thereof will be omitted.

As described above, the first belt 112 may be drawn from the first retractor 111 by a predetermined length, or may be rewound into its original position. The first belt 112 may have a length of about 50 to 200 cm. Furthermore, for example, but without limitation, the first belt 112 may be made of natural leather, artificial leather, natural fiber, artificial fiber, or the like.

The first clip 113 may include a first coupling hole 113a configured to be coupled to the first belt 112 and a first catch hook 113b configured to be selectively coupled to and separated from one side (for example, the left side) of the waist belt 100A and to have an open bottom. Accordingly, the first clip 113 may be coupled to the waist belt 100A via the first catch hook 113b in a direction from the top of the waist belt 100A to the bottom of the waist belt 100A, and may be separated from the waist belt 100A via the first catch hook 113b in a direction from the bottom of the waist belt 100A to the top of the waist belt 100A. Accordingly, the first clip 113 and the waist belt 100A are easily coupled to and separated from each other. Furthermore, for example, but without limitation, the first clip 113 may be made of stainless steel, aluminum, aluminum alloy, magnesium, magnesium alloy, or the like.

The second seat belt unit 120 may be selectively coupled to and separated from the other side (for example, the right side) of the waist belt 100A in the state of having been fastened to the seat (for example, the seat part S or back support B) on which the infant sits.

For example, but without limitation, the second seat belt unit 120 may include a second retractor 121, a second belt 122, and a second clip 123.

For example, but without limitation, the second retractor 121 may be directly fastened to the other side (for example, the right side) of the seat (for example, the seat part S or back support B), the second belt 122 may be drawing from or rewound into the second retractor 121 by a predetermined length, and the second clip 123 may be coupled to an end of the second belt 122 and may be selectively coupled to and separated from the other side (for example, the right side) of the waist belt 100A.

In this case, the second retractor 121 allows the second belt 122 to be drawn by a length of about 400 mm at a relatively low speed, fastens the second belt 122 without being drawn at a relative high speed (for example, in the case of the sudden stop, rear-end collision, collision, or the like of a vehicle), and allows the second belt 122 to be rewound when the second belt 122 is separated from the waist belt 100A. Since the structure of the second retractor 121 is well known already, a detailed description thereof will be omitted.

As described above, the second belt 122 may be drawn from the second retractor 121 by a predetermined length, or may be rewound into its original position. The second belt 122 may have a length of about 50 to 200 cm. Furthermore, for example, but without limitation, the second belt 122 may be made of natural leather, artificial leather, natural fiber, artificial fiber, or the like.

Furthermore, the second clip 123 may include a second coupling hole 123a configured to be coupled to the second belt 122 and a second catch hook 123b configured to be selectively coupled to and separated from one side (for example, the right side) of the waist belt 100A and to have an open bottom. Accordingly, the second clip 123 may be coupled to the waist belt 100A via the second catch hook 123b in a direction from the top of the waist belt 100A to the bottom of the waist belt 100A, and may be separated from the waist belt 100A via the second catch hook 123b in a direction from the bottom of the waist belt 100A to the top of the waist belt 100A. Accordingly, the second clip 123 and the waist belt 100A are easily coupled to and separated from each other. Furthermore, for example, but without limitation, the second clip 123 may be made of stainless steel, aluminum, aluminum alloy, magnesium, magnesium alloy, or the like.

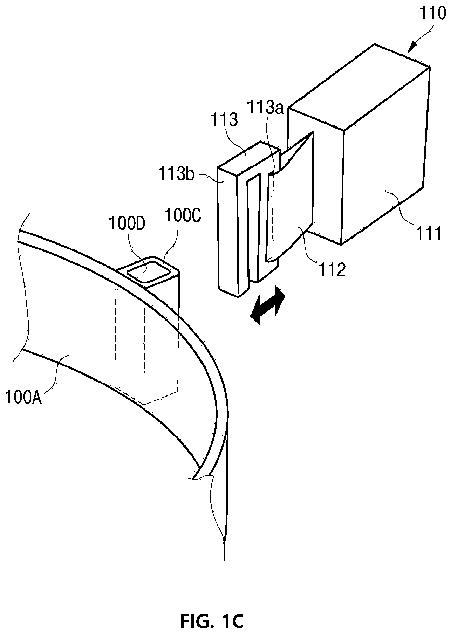

Meanwhile, although the first and second catch hooks 113b and 123b of the first and second clips 113 and 123 may be configured to be directly coupled to the waist belt 100A in a direction from the top of the waist belt 100A to the bottom of the waist belt 100A, the waist belt 100A may further include separate first and second coupling sockets 100C, as shown in FIG. 1c, and the first and second clips 113 and 123 may selectively be coupled to and separated from the first and second coupling sockets 100C.

In other words, the waist belt 100A may further include the first and second coupling sockets 100C disposed on both sides thereof. The first and second coupling sockets 100C are fastened to the waist belt 100A, and may include first and second coupling holes 100D into which the first and second catch hooks 113b and 123b of the first and second clips 113 and 123 are coupled, respectively.

Once the first and second catch hooks 113b and 123b are coupled into the first and second coupling holes 100D of the first and second coupling sockets 100C in a downward direction, a coupled state is not released by themselves due to their own weights. However, when the first and second catch hooks 113b and 123b are lifted from the first and second coupling holes 100D in an upward direction, the first and second catch hooks 113b and 123b are easily separated from the first and second coupling holes 100D.

As described above, according to the embodiment of the present invention, there is provided the infant seat belt device 100 that is used in such a manner that an infant wears the separate waist belt 100A completely surrounding his or her waist and the first and second seat belt units 110 and 120 are coupled to the waist belt 100A, so that the first and second seat belt units 110 and 120 having an automatic brake function hold the waist in case of the sudden stop, rear-end collision, collision, or the like of a vehicle and the first and second seat belt units 110 and 120 are allowed to move freely by a length (for example, about 400 mm), over which the infant can move, in normal times, thereby securing the safety of the infant while reducing the inconvenience of the infant.

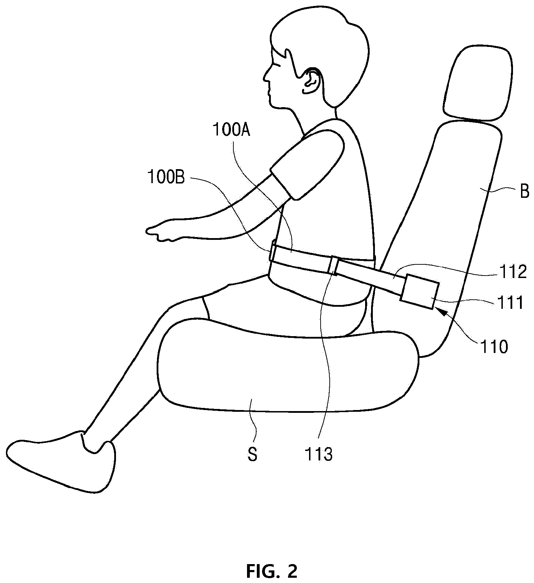

FIG. 2 is a schematic diagram showing an example in which the infant seat belt device 100 according to the embodiment of the present invention is worn. In this case, reference will also be made to FIGS. 1a to 1c.

As shown in FIG. 2, an infant sits on the seat part S of the seat, and the waist belt 100A is coupled to the waist of the infant. In this case, the waist belt 100A completely surrounds the waist of the infant in a single circle, and may include, for an example, the buckle structure 100B. Furthermore, the first and second seat belt units 110 and 120 are coupled to the seat part S or back support B of the seat, the first and second belts 112 and 122 are drawn from the first and second seat belt units 110 and 120, and finally the first and second clips 113 and 123 are coupled to the left and right sides of the waist belt 100A.

Accordingly, the first and second seat belt units 110 and 120 having an automatic brake function hold the waist of an infant in case of the sudden stop, rear-end collision, collision, or the like of a vehicle, and the first and second seat belt units 110 and 120 are allowed to move freely by a length over which the infant can move in normal times.

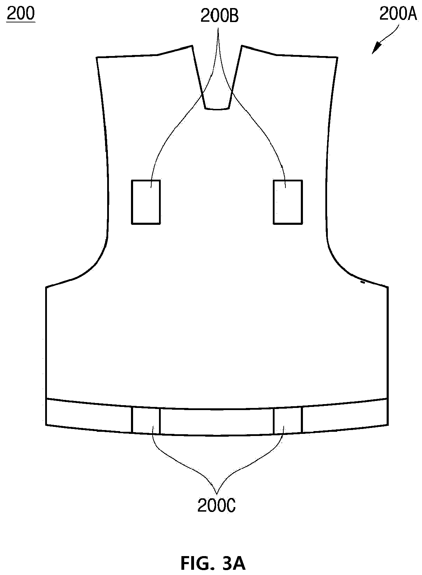

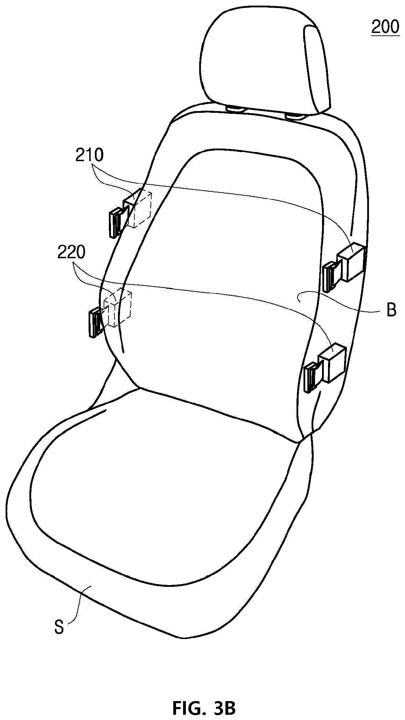

FIGS. 3a and 3b are schematic diagrams showing an infant vest 200A and a seat S and B related to an infant seat belt device 200 according to another embodiment of the present invention.

As shown in FIGS. 3a and 3b, the infant seat belt device 200 according to the other embodiment of the present invention may include the infant vest 200A, a pair of first coupling members 200B, a pair of second coupling members 200C, a pair of first seat belt units 210, and a pair of second seat belt units 220.

The vest 200A may be a garment that completely surrounds the trunk of an infant in a single circle. For example, but without limitation, the vest 200A may be a sleeveless garment that is worn over an outer garment. For example, but without limitation, the vest 200A may be a bulletproof vest, a life vest, a buoyant vest, or the like. As an example, the vest 200A may include a plurality of locking buttons formed on the front of the vest 200A. For example, but without limitation, the vest 200A may be made of natural leather, artificial leather, natural fiber, artificial fiber, or the like. The vest 200A has a larger stiffness than a general garment, and thus the first coupling member 200B and the second coupling member 200C are securely coupled and prevent separation.

The pair of first coupling members 200B may be coupled to the left and right sides of the upper side of the back (for example, a side behind the chest) of the vest 200A. For example, but without limitation, the first coupling members 200B may be coupling sockets 100C each having the above-described coupling hole 100D.

The pair of second coupling members 200C may be coupled to the left and right sides of the lower side of the back (for example, a side behind the abdomen) of the vest 200A. For example, but without limitation, the second coupling members 200C may be coupling sockets 100C each having the above-described coupling hole 100D.

The pair of first seat belt units 210 may be selectively coupled to and separated from the first coupling members 200B in the state of having been fastened to the back support B of a seat on which an infant sits. In this case, the pair of first seat belt units 210 may be fastened to approximately the edges of the back support B at the locations of the back support B corresponding to the first coupling members 200B.

The pair of second seat belt units 220 may be selectively coupled to and separated from the second coupling members 200C in the state of having been fastened to the back support B of the seat on which the infant sits. In this case, the pair of second seat belt units 220 may be fastened to approximately the edges of the back support B at the locations of the back support B corresponding to the second coupling members 200C.

Meanwhile, each of the pair of first seat belt units 210 may include a first retractor 111 configured to be coupled to one of the left and right sides of the upper side of the back support B of the seat, a first belt 112 configured to be drawn from the first retractor 111, and a first clip 113 configured to be coupled to the first belt 112 and to be selectively coupled to and separated from a corresponding one of the first coupling members 200B. Substantially, the first seat belt units 210 have the same structure as the above-described first seat belt unit 110.

In this case, the first clip 113 may include a first coupling hole 113a configured to be coupled to a corresponding one of the first belts 112 and a first catch hook 113b configured to be selectively coupled to and separated from a corresponding one of the first coupling members 200B and to have an open bottom.

Furthermore, each of the pair of second seat belt units 220 may include a second retractor 121 configured to be coupled to one of the left and right sides of the lower side of the back support B of the seat, a second belt 122 configured to be drawn from the second retractor 121, and a second clip 123 configured to be coupled to the second belt 122 and to be selectively coupled to and separated from a corresponding one of the second coupling members 200C. Substantially, the second seat belt units 220 have the same structure as the above-described second seat belt unit 120.

In this case, the second clip 123 may include a second coupling hole 123a configured to be coupled to a corresponding one of the second belts 122 and a second catch hook 123b configured to be selectively coupled to and separated from a corresponding one of the second coupling members 200C and to have an open bottom.

As described above, according to the other embodiment of the present invention, there is provided the infant seat belt device 200 that is used in such a manner that an infant wears the separate vest 200A and the four seat belt units 210 and 220 are coupled to the vest 200A, so that the seat belt units 210 and 220 having an automatic brake function hold the shoulder and waist of the infant in case of the sudden stop, rear-end collision, collision, or the like of a vehicle, and the seat belt units 210 and 220 are allowed to move freely by a length (for example, about 400 mm), over which the infant can move, in normal times, thereby securing the safety of the infant while reducing the inconvenience of the infant.

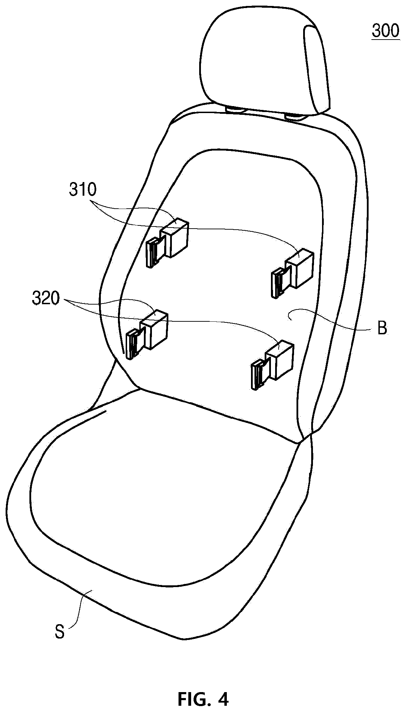

FIG. 4 is a schematic diagram showing a seat related to an infant seat belt device 300 according to still another embodiment of the present invention.

As shown in FIG. 4, in the infant seat belt device 300 according to the present embodiment, a pair of first seat belt units 310 are coupled to the left and right sides of about the center of the upper side of the back support B of a seat and a pair of second seat belt units 320 are coupled to the left and right sides of about the center of the lower side of the back support B of the seat. In this case, the first seat belt units 310 have the same structure as the above-described first seat belt unit 110, and the second seat belt units 320 have the same structure as the above-described second seat belt unit 120.

As described above, the infant seat belt device 300 according to the present embodiment enables an infant having a considerably small body to be efficiently coupled and fastened to the vest 200A, thereby improving the safety of the infant.

According to an embodiment of the present invention, there is provided the infant seat belt device that is used in such a manner that an infant wears the separate waist belt and the two seat belt units are fitted over the waist belt, so that the seat belt units having an automatic brake function hold the waist of the infant in case of the sudden stop, rear-end collision, collision, or the like of a vehicle and the seat belt units are allowed to move freely by a length (for example, about 400 mm), over which the infant can move, in normal times, thereby securing the safety of the infant while reducing the inconvenience of the infant.

According to an embodiment of the present invention, there is provided the infant seat belt device that is used in such a manner that an infant wears the separate vest and the four seat belt units are fitted over the vest, so that the seat belt units having an automatic brake function hold the shoulder and waist of the infant in case of the sudden stop, rear-end collision, collision, or the like of a vehicle, and the seat belt units are allowed to move freely by a length (for example, about 400 mm), over which the infant can move, in normal times, thereby securing the safety of the infant while reducing the inconvenience of the infant.

The above-described embodiments are merely embodiments for the practice of the infant seat belt device according to the present invention, and the present invention is not limited to the above-described embodiments. It will be apparent to those having ordinary knowledge in the art to which the present invention pertains that various modifications or alterations may be made without departing from the scope and technical spirit of the present invention.

## Claims

1. An infant seat belt device, comprising:
a waist belt configured to completely surround a waist of an infant in a single circle;
a first seat belt unit configured to be selectively coupled to and separated from one side of the waist belt in a state of having been fastened to a seat on which the infant sits; and
a second seat belt unit configured to be selectively coupled to and separated from a remaining side of the waist belt in a state of having been fastened to the seat on which the infant sits;
wherein the first seat belt unit comprises a first retractor configured to be coupled to one side of the seat, a first belt configured to be drawn from the first retractor, and a first clip configured to be coupled to the first belt and to be selectively coupled to and separated from one side of the waist belt;
wherein the second seat belt unit comprises a second retractor configured to be coupled to a remaining side of the seat, a second belt configured to be drawn from the second retractor, and a second clip configured to be coupled to the second belt and to be selectively coupled to and separated from a remaining side of the waist belt;
wherein the first clip comprises a first coupling hole configured to be coupled to the first belt and a first catch hook configured to be selectively coupled to and separated from one side of the waist belt and to have an open bottom; and
wherein the second clip comprises a second coupling hole configured to be coupled to the second belt and a second catch hook configured to be selectively coupled to and separated from a remaining side of the waist belt and to have an open bottom.

2. An infant seat belt device, comprising:
a vest configured to completely surround a trunk of an infant in a single circle;
a pair of first coupling members configured to be coupled to left and right sides of an upper side of a back of the vest;
a pair of second coupling members configured to be coupled to left and right sides of a lower side of the back of the vest;
a pair of first seat belt units configured to be selectively coupled to and separated from the first coupling members in a state of having been fastened to a back support of a seat on which the infant sits; and
a pair of second seat belt units configured to be selectively coupled to and separated from the second coupling members in a state of having been fastened to the back support of the seat on which the infant sits;
wherein each of the pair of first seat belt units comprises a first retractor configured to be coupled to one of left and right sides of an upper side of the back support of the seat, a first belt configured to be drawn from the first retractor, and a first clip configured to be coupled to the first belt and to be selectively coupled to and separated from a corresponding one of the first coupling members;
wherein each of the pair of second seat belt units comprises a second retractor configured to be coupled to one of left and right sides of a lower side of the back support of the seat, a second belt configured to be drawn from the second retractor, and a second clip configured to be coupled to the second belt and to be selectively coupled to and separated from a corresponding one of the second coupling members;
wherein the first clip comprises a first coupling hole configured to be coupled to a corresponding one of the first belts and a first catch hook configured to be selectively coupled to and separated from a corresponding one of the first coupling members and to have an open bottom; and
wherein the second clip comprises a second coupling hole configured to be coupled to a corresponding one of the second belts and a second catch hook configured to be selectively coupled to and separated from a corresponding one of the second coupling members and to have an open bottom.
